# FASCICULE DE BREVET EUROPEEN

(11) **EP 2 805 230 B1**
(45) Date de publication et mention de la délivrance du brevet: **29.04.2020**
(21) Numéro de dépôt: 13707046.2
(22) Date de dépôt: 16.01.2013
(51) Int. Cl.: G06F 7/14, G03B 27/00, H04N 5/84, G11B 7/003, G06F 11/08, H04N 21/433, H04N 21/414

(54) **PROCÉDÉ DE SAUVEGARDE D'UN CONTENU CINÉMATOGRAPHIQUE NUMÉRIQUE**
VERFAHREN ZUR SICHERUNG DIGITALER KINEMATOGRAPHISCHER INHALTE
METHOD FOR BACKING UP DIGITAL CINEMATOGRAPHIC CONTENT

(30) Priorité: 18.01.2012 FR 1250508
(43) Date de publication de la demande: 26.11.2014
(73) Titulaire: ONO FILMS, 75018 Paris (FR)
(72) Inventeur: Simkine, Antoine, 75018 Paris (FR)
(74) Mandataire: Nony
(86) Numéro de dépôt international: PCT/IB2013/050398
(87) Numéro de publication internationale: WO 2013/108190

(56) Documents cités:
- EP-A1- 1 187 476
- EP-A2- 1 158 519
- WO-A1-2010/064118
- GB-A- 684 351
- GB-A- 2 428 130
- US-A1- 2006 093 241
- US-A1- 2010 295 967
- US-A1- 2011 070 548

## Description

La présente invention concerne l'archivage d'un contenu cinématographique numérique.

Les contenus cinématographiques numériques sont en plein essor.

Les pratiques de distribution des films ont été modifiées, d'où la disparition progressive du support photographique, y compris au tournage. Aujourd'hui les films sont de plus en plus tournés et/ou post-produits en numérique. L'élément fondamental final du film devient ainsi difficile à définir et présente des inconvénients.

Il peut s'agir de la version 2K étalonnée. Selon cette version, l'univers dans lequel se trouvent les données RGB ou DPX n'est jamais parfaitement connu. Il y a en outre des LUT, tables de correspondances, mises en jeu dans cette version numérique où l'on est dépendant du matériel de diffusion, notamment des projecteurs.

Il peut encore s'agir de la version DSM (Digital Source Master). Le DSM est le master numérique d'un film ; il équivaut, dans l'univers du 35mm, au négatif original du long-métrage. Le DSM n'est soumis à aucune contrainte puisque le réalisateur du film reste libre de capter ses images avec les moyens qu'il souhaite (caméra 35mm, caméra HD). Il appartient ensuite au laboratoire numérique de réaliser un DSM à partir de l'élément fourni par la production à l'issue du tournage (copie 35mm, master HD) en scannant les images de cet élément s'il résulte d'un tournage sur pellicule.

L'élément fondamental du film peut encore être la version XYZ non compressée issue de l'étalonnage (valeur absolue des données colorimétriques). Cette version comporte beaucoup de données inutiles dont on se débarrasse pour faire le format compressé JPEG 2000.

Il existe aussi la version retour sur film. Il s'agit d'une interprétation de la version étalonnée en numérique mais l'internégatif ne peut pas servir à plus de 500 copies. En créer un autre à partir des données est aléatoire, ce qui constitue un inconvénient de cette version. Même si c'est la version de sauvegarde, il faudra la numériser, la restaurer et tenter de la remettre comme elle est censée être, état pour lequel on n'a pas de référence. Si l'on fait un nouveau transfert sur film plusieurs années plus tard, rien ne permet d'être certain des paramètres qui permettent d'être fidèle à l'original puisque la pellicule et les bains de développement sont dépendants de la photochimie, qui varie considérablement.

Une autre version est la CMY. C'est une séparation trichrome qui est relativement fidèle. Sa pérennité (pellicule noir et blanc) est assurée pour longtemps. Cependant, la restauration est très coûteuse. Elle nécessite en effet 3 scans, une recomposition, une calibration, et on n'a pas de référence sur ce que c'est sensé être. Un autre inconvénient est que sa fabrication et son stockage sont également coûteux.

La version DCP (Digital Cinéma Package) est relativement indépendante des supports de diffusion, de plus elle est en XYZ (valeur absolue des couleurs), et en format JPEG 2000, donc compressée. Il s'agit de l'équivalent en cinéma numérique de la copie de projection, qui en cinéma traditionnel (argentique) se présente sous forme de bobines de film argentique 35 mm.

Un DCP se compose d'un ensemble de fichiers informatiques (images, sons, sous-titres, méta-données, ...) qui sont destinés à être stockés et joués dans la cabine de projection par un lecteur de DCP, couplé à un projecteur numérique.

L'archivage sur le long terme requiert que les données soient préservées fidèlement à leur forme et leur contenu d'origine, et qu'elles puissent être récupérées au format numérique dans le futur. Les moyens de récupération des données ne doivent pas seulement permettre un affichage sur écran, une impression, ou un autre système de sortie des données, mais une récupération des données numériques sources.

Il existe des médias de stockage binaire, notamment les bandes magnétiques ou les disques et les supports de stockage optique. Ces types de support ne garantissent pas la fiabilité à long terme du stockage des données en raison de leur relativement courte durée de vie, ainsi qu'à cause du matériel et des logiciels qu'ils requièrent pour l'accès aux données qui y sont sauvegardées. Tout changement du processeur ou du système d'exploitation peut rendre les données qui ont été enregistrées sur des supports de stockage binaire inutilisables.

La demande de brevet US 2006/0045387 divulgue une méthode de préservation de données binaires sur un support d'archivage analogique, pouvant être un microfilm. Les données binaires peuvent être variées et peuvent correspondre à une séquence vidéo.

La demande EP 1 308 857 divulgue une méthode de préservation sur le long terme de données sur un support sous une forme lisible par l'homme.

L'étude intitulée « Comparison of Methods and Costs of Digital Préservation » British Library Research and Innovation Report 106 décrit la problématique de la sauvegarde de données numériques et tend à considérer le changement de support d'enregistrement, notamment le passage à une sauvegarde sur microfilm, comme une solution à déconseiller du fait du risque de perte de données utiles.

La demande GB 2 428 130 décrit une méthode de stockage à long-terme d'une information numérique comprenant les étapes consistant à encoder l'information numérique dans un motif à deux dimensions, à enregistrer le motif sur un matériel photographique et à stocker le matériel photographique enregistré.

La demande US 2010/0295967 décrit une méthode d'archivage de données numériques comprenant les étapes consistant à stocker des données numériques sur un support photographique et à inscrire sur le support une portion lisible par l'homme comprenant des instructions permettant de lire et d'interpréter les données numériques.

Pour les films à grand budget, les frais liés à la conservation des données sous format numérique en multipliant les supports informatiques et en assurant leur maintenance sont négligeables et la conservation peut être assurée sans difficultés.

Par contre, pour les films à faible budget ou toutes les autres sources de contenu cinématographique, la problématique de la conservation est considérable.

A la connaissance du Demandeur, il n'existe à ce jour aucune solution de sauvegarde pérenne dont le coût la rende applicable au plus grand nombre de contenus cinématographiques numériques.

Par conséquent, il existe un besoin non satisfait pour bénéficier d'un système performant et peu coûteux de sauvegarde et d'archivage de données numériques.

La présente invention vise à y répondre et elle y parvient grâce à un procédé de sauvegarde d'un contenu cinématographique numérique tel que défini à la revendication 1.

L'invention offre une solution aux problèmes ci-dessus en permettant aux réalisateurs et producteurs notamment de conserver de façon pérenne leurs œuvres à un coût modeste sans perte outre mesure de qualité, en choisissant un format compressé conservant suffisamment de données pour une projection de qualité en salle.

La solution proposée par l'invention offre ainsi un compromis particulièrement satisfaisant entre l'inconvénient dû à la perte de données accompagnant inévitablement la compression et l'avantage lié à la façon de sauvegarder les données compressées.

De préférence, le format compressé conserve une information colorimétrique absolue, et notamment permet de retrouver après archivage les coordonnées colorimétriques dans un espace colorimétrique de référence, notamment l'espace XYZ.

De préférence, la compression se fait au format JPEG 2000.

Les données enregistrées sur le film peuvent comporter des données cinématographiques mais aussi, par exemple, des instructions sous forme de code machine.

La pellicule photographique est de préférence une pellicule argentique 35 mm. L'un des intérêts majeurs du film photographique est sa grande stabilité dans le temps : le support est connu, et tant l'expérience que les tests de laboratoire ont démontré qu'il pouvait se conserver, dans des conditions favorables de température et d'humidité, plusieurs centaines d'années.

Le procédé selon l'invention peut comporter la lecture des données inscrites sur la pellicule et leur comparaison avec les données à inscrire. On s'assure ainsi de la fiabilité de la sauvegarde dès le développement de la pellicule, ce qui peut permettre, le cas échéant, de recommencer l'opération pour une séquence enregistrée de façon défaillante sur la pellicule, par exemple en procédant à un nouvel enregistrement sur la même pellicule, de la séquence précédemment enregistrée de façon défaillante.

Le procédé comporte l'inscription sur la pellicule des données de façon redondante, afin d'accroître la fiabilité de la sauvegarde. En particulier, la redondance des données est telle que l'endommagement de quelques centimètres de pellicule, par exemple jusqu'à 10 cm de pellicule, n'entrave pas la restauration de toutes les données du contenu que l'on cherchait à sauvegarder. Le procédé peut comporter l'inscription sur la pellicule d'un correctif en cas de détection d'une erreur d'écriture des données, de façon à faciliter la récupération de données ayant corrigé l'erreur.

La pellicule est de préférence développée en ligne, c'est-à-dire que des données sont imagées sur une nouvelle portion de pellicule tandis que dans le même temps une portion de pellicule précédemment imagée est développée.

Les données inscrites sur la pellicule peuvent l'être sous forme de pixels codant chacun une information par niveaux de gris.

Le procédé peut aussi comporter les étapes consistant à :
- permettre à un utilisateur d'émettre une demande de récupération des données numériques sauvegardées sur une pellicule photographique par l'intermédiaire d'une interface utilisateur,
- lire la pellicule photographique et régénérer les données numériques sous un format compressé, lequel peut être le même que celui sous lequel les données ont été inscrites sur la pellicule, ou un format différent, et
- transmettre à l'utilisateur ces données numériques.

L'invention permet de sauvegarder non seulement un flux d'images numériques, mais aussi tout l'ensemble des données numériques se rapportant à ce flux. Les données numériques comportent des métadonnées, pouvant donner des informations sur les données numériques sauvegardées. Ces métadonnées permettent notamment une indexation dans une base de données de sauvegarde. L'invention rend possible la sauvegarde et la récupération de ces données connexes également.

La présente invention permet de sauvegarder les informations des couleurs associées aux données numériques. Ces informations peuvent comporter un codage en valeurs absolues selon les normes colorimétriques usuelles dans le domaine du cinéma, en particulier dans l'espace colorimétrique XYZ.

Dans un exemple de réalisation préféré, on sauvegarde sur la pellicule photographique un Digital Cinéma Package (DCP), dont l'élément fondamental comporte les données images.

Comme rappelé ci-dessous, un DCP comporte des sous-titres codés dans un document XML, une bande son, des images, des métadonnées associées aux images représentant la position de celles-ci sur la séquence. Les couleurs des images peuvent être codées sur 36 bits (chaque couleur sur 12 bits). Dans le cas d'un codage de chaque pixel sur 12 bits, pour sauvegarder une version 4K, c'est-à-dire de format 4000 par 3000 points, chaque image numérique comporte 12 millions de pixels. Il y a donc un intérêt majeur à compresser les images dans un format permettant d'économiser à la fois du matériel, et de l'espace données. Le format de compression est ainsi de préférence le format JPEG 2000. Ce format permet de récupérer les images à des tailles adaptées à la puissance du matériel utilisé, tout en ne prenant que peu d'espace de sauvegarde.

Le DCP peut comporter une clef de cryptage qui peut être sauvegardée sur une partie distincte des autres fichiers composant le DCP sur le film photographique. Ainsi, l'ensemble des données numériques nécessaires à la projection d'un film peuvent être sauvegardées.

La présente invention pourra être mieux comprise à la lecture de la description détaillée qui va suivre, d'un exemple de mise en œuvre non limitatif de celle-ci, et à l'examen du dessin annexé, sur lequel :
- la figure 1 est un schéma en blocs illustrant différentes étapes d'un procédé d'archivage de données numériques selon l'invention,
- la figure 2 illustre des étapes d'un procédé de récupération de données numériques archivées selon l'invention.

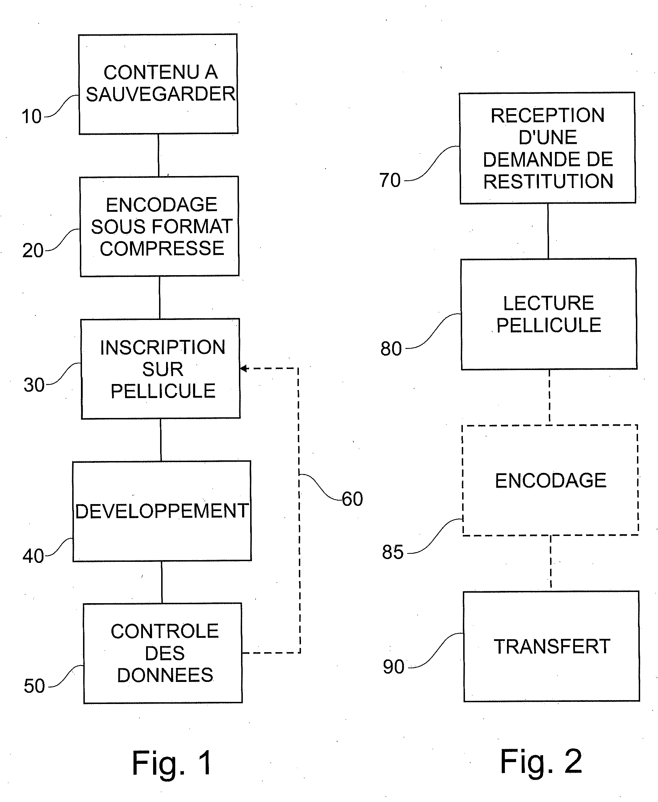

Le procédé d'archivage selon l'invention dont certaines étapes sont illustrées à la figure 1 comprend le fait de disposer de données cinématographiques numériques sources à une étape 10. Il s'agit par exemple d'une version 4K.

Le procédé peut comporter une étape 20 d'encodage de ces données sous un format compressé, notamment le format JPEG 2000, tel que rencontré dans le DCP. En variante, les données à archiver sont fournies sous un format déjà compressé.

Le format de fichier pour le conteneur des images et audio est le MXF. Il y a un conteneur MXF qui contient les images, un autre pour l'audio. Il peut y avoir d'autres conteneurs de fichiers MXF, autant que de pistes audio par exemple. Les sauvegardes des métadonnées, du son, des images pourront s'effectuer à des emplacements respectifs distincts sur le film photographique.

Les données numériques compressées sont imagées à l'étape suivante 30 sur une pellicule argentique 35 mm. Les données sont de préférence encodées sous forme de pixels codant par leur niveau de gris une information, un pixel codant par exemple plus de 2⁸ niveaux de gris. Un algorithme permet le passage des données numériques à sauvegarder aux pixels à imager, de façon à permettre la restitution ultérieure des données numériques.

Par exemple, un balayage est réalisé sur le film au fur et à mesure de son défilement, et chaque pixel est imagé avec un niveau de gris qui code une information binaire. La lecture s'effectue avec le même balayage, pour lire successivement les pixels et déterminer leur niveau de gris, qui permet de régénérer l'information numérique.

La pellicule est développée en ligne à l'étape 40 et une lecture peut être effectuée juste après développement, en ligne, à l'étape 50 pour s'assurer de la fiabilité de l'enregistrement.

Un système de contrôle permet de vérifier que les données imagées lues correspondent bien aux données sources. Ce système peut comporter un scanner en ligne à la sortie de la développeuse.

En cas de détection d'une erreur d'écriture, lors du contrôle, les données entachées d'erreur peuvent être réécrites sur la pellicule à l'étape 60, et de nouveau contrôlées. Des données signalant la présence du correctif sur la pellicule peuvent être inscrites sur celle-ci.

Le film photographique est ensuite stocké par un dispositif de stockage, par exemple dans un entrepôt climatisé.

La figure 2 représente des étapes de récupération des données numériques sources. A l'étape 70, une demande de récupération des données est effectuée sur une interface. Ensuite, la pellicule est récupérée et lue par un scanner, à l'étape 80, pour régénérer les données encodées à l'étape 20 précédente. Le cas échéant, un nouvel encodage sous un format différent est réalisé à l'étape 85.

Les données numériques sont ensuite transférées sur un support numérique ou par un réseau à l'utilisateur en ayant fait la demande, à l'étape 90.

L'expression « comportant un » doit être comprise comme étant synonyme de « comportant au moins un », sauf si le contraire est spécifié.

## Revendications

1. Procédé de sauvegarde d'un contenu cinématographique numérique, comportant les étapes consistant à :
- générer à partir dudit contenu un flux numérique encodé sous un format compressé, ou disposer dudit flux numérique déjà encodé sous un format compressé, le flux numérique comprenant des images numériques et l'ensemble des données numériques se rapportant à ce flux,
- inscrire, de façon redondante, ce flux numérique encodé sous format compressé sur une pellicule photographique, de sorte que l'endommagement jusqu'à 10 cm de pellicule n'entrave pas la restauration de tout le contenu.

2. Procédé selon la revendication 1, le format compressé étant le format JPEG 2000.

3. Procédé selon la revendication 1 ou 2, la pellicule photographique étant une pellicule argentique 35 mm.

4. Procédé selon l'une quelconque des revendications 1 à 3, comportant la lecture des données inscrites sur la pellicule et la comparaison avec les données à inscrire, cette comparaison s'effectuant de préférence en ligne.

5. Procédé selon la revendication 4, comportant l'inscription sur la pellicule d'un correctif en cas de détection d'une erreur d'écriture des données.

6. Procédé selon l'une quelconque des revendications précédentes, la pellicule étant imagée et développée en ligne.

7. Procédé selon l'une quelconque des revendications 1 à 6, les données imagées étant codées par niveaux de gris des pixels, sur le film photographique.

8. Procédé selon l'une quelconque des revendications précédentes, comportant les étapes consistant à :
- permettre à un utilisateur d'émettre une demande de récupération de données numériques sauvegardées sur la pellicule photographique par l'intermédiaire d'une interface utilisateur,
- lire la pellicule photographique et régénérer les données numériques sous un format compressé, et
- transmettre à l'utilisateur ces données numériques.

## Patentansprüche

1. Verfahren zur Sicherung eines digitalen kinematographischen Inhalts, aufweisend die Schritte des:
- Erzeugens, ausgehend von dem Inhalt, eines digitalen Stroms, der in einem komprimierten Format codiert ist, oder Anordnens des digitalen Stroms, der bereits codiert ist, in einem komprimierten Format, der digitale Strom umfassend digitale Bilder und die Gesamtheit der digitalen Daten, die diesen Strom betreffen,
- redundanten Schreibens dieses digitalen Stroms, der in dem komprimierten Format codiert ist, auf einen fotografischen Film, so dass die Beschädigung bis zu 10 cm des Films die Wiederherstellung des gesamten Inhalts nicht beeinträchtigt.

2. Verfahren nach Anspruch 1, wobei das komprimierte Format das JPEG-2000-Format ist.

3. Verfahren nach Anspruch 1 oder 2, wobei der fotografische Film ein analoger 35mm-Film ist.

4. Verfahren nach einem der Ansprüche 1 bis 3, aufweisend das Lesen der Daten, die auf den Film geschrieben sind, und das Vergleichen mit den zu schreibenden Daten, wobei dieses Vergleichen vorzugsweise online erfolgt.

5. Verfahren nach Anspruch 4, aufweisend das Schreiben eines Korrektivs auf den Film bei Erkennung eines Schreibfehlers der Daten.

6. Verfahren nach einem der vorhergehenden Ansprüche, wobei der Film online abgebildet und entwickelt wird.

7. Verfahren nach einem der Ansprüche 1 bis 6, wobei die abgebildeten Daten nach Graustufen der Pixel auf dem fotografischen Film codiert werden.

8. Verfahren nach einem der vorhergehenden Ansprüche, aufweisend die Schritte des:
- Gestattens, einem Benutzer, mittels einer Benutzerschnittstelle eine Anforderung zum Abruf digitaler Daten zu senden, die auf dem fotografischen Film gesichert sind,
- Lesens des fotografischen Films und erneuten Erzeugens der digitalen Daten in einem komprimierten Format, und
- Übertragens dieser digitalen Daten an den Benutzer.

## Claims

1. A method for backing up digital cinematographic content, including the steps consisting in:
- generating from said content a digital stream encoded in a compressed format, or having said digital stream already encoded in a compressed format, the digital stream comprising digital images and all of the digital data being related to this stream,
- recording, in a redundant manner, this encoded digital stream in a compressed format onto a photographic film such that damage up to 10 cm of film does not hinder the restoration of all the content.

2. Method according to Claim 1, the compressed format being the JPEG 2000 format.

3. Method according to Claim 1 or 2, the photographic film being an analog 35 mm film.

4. Method according to any one of Claims 1 to 3, including the reading of data recorded onto the film and the comparison with the data to be recorded, this comparison being preferably carried out in line.

5. Method according to Claim 4, including the recording of a corrective onto the film in the event of a data writing error being detected.

6. Method according to any one of the preceding claims, the film being imaged and developed in line.

7. Method according to any one of Claims 1 to 6, the imaged data being encoded by gray levels of the pixels, onto the photographic film.

8. Method according to any one of the preceding claims, including the steps consisting in:
- allowing a user to issue a request for the recovery of digital data backed up on the photographic film by way of a user interface,
- reading the photographic film and regenerating the digital data in a compressed format, and
- transmitting these digital data to the user.
